# EUROPEAN PATENT APPLICATION

(11) **EP 1 641 060 A1**
(43) Date of publication of application: **29.03.2006**
(21) Application number: 04746938.2
(22) Date of filing: 28.06.2004
(51) Int. Cl.: H01M 4/02, H01M 4/04, H01M 4/62

(54) **ACTIVE MATERIAL FOR CATHODE FILM, POLYETHER POLYMER COMPOSITION FOR CATHODE FILM, CATHODE FILM, AND METHOD FOR PRODUCING CATHODE FILM**

(30) Priority: 27.06.2003 JP 2003185607
(71) Applicant: ZEON CORPORATION, Tokyo 100-8323 (JP)
(72) Inventor: NISHIMURA, Koichi c/o ZEON CORPORATION, Chiyoda-ku, Tokyo 1008323 (JP); FUKUMINE, Yoshio c/o ZEON CORPORATION, Chiyoda-ku, Tokyo 1008323 (JP); HONDA, Takashi c/o ZEON CORPORATION, Chiyoda-ku, Tokyo 1008323 (JP)
(74) Representative: Albrecht, Thomas
(86) International application number: PCT/JP2004/009469
(87) International publication number: WO 2005/001963

(57) **Abstract**

The present invention relates to a technique for producing a cathode film having a thin and even thickness and having stable electrical characteristics at a high productivity by an extrusion molding method.

That is, the present invention provides an active material for a cathode film comprising a lithium compound having a void fraction of 0.36 or less and a polyether polymer composition for a cathode film comprising a polyether polymer, an electrolytic salt compound which is soluble in the above polymer and the active material for a cathode film described above. The object described above can be achieved by extrusion-molding them.

## Description

### TECHNICAL FIELD

The present invention relates to an active material and a polyether polymer composition for a cathode film, specifically to a an active material for a cathode film which can produce a cathode film having a thin and even thickness and having stable electrical characteristics at a high productivity and a polyether polymer composition for a cathode film containing the same.

### BACKGROUND ART

A mixture obtained by adding a polyether polymer such as an ethylene oxide-propylene oxide copolymer to an electrolytic salt compound such as a lithium salt compound which is soluble in the above polymer shows a high ionic conductivity, and therefore it attracts attentions as a high molecular material for a solid electrolyte (refer to Japanese Patent Application Laid-Open No. 83249/1986 and Japanese Patent Application Laid-Open No. 136407/1988).

A solid electrolyte-containing polymer material has to be a thin film in order to obtain a high output when used for an ionic conductive membrane for a cell. However, if the polyether polymer described above is controlled to such a composition and a molecular weight that a mechanical strength such as a tensile strength grows sufficiently large, the melt viscosity is elevated, and the fluidity is deteriorated. Accordingly, a method in which a solution prepared by dissolving a polyether polymer in an organic solvent is cast on a flat plate is employed as well in the patent documents described above as a production process for a high molecular solid electrolytic film. However, a casting method has a low productivity in producing a film and involves a problem on environmental safety, and therefore an extrusion molding method attracts attentions in recent years.

A solid electrolytic film using a polyether polymer is suited as a cathode film for a cell. In producing a cathode film, a large amount of an active material which is a granular material in addition to an electrolytic salt compound has to be blended with a polyether polymer. In a process for producing a cathode film, these components have to be homogeneously dispersed in a polyether polymer, but the casting described above has involved the problem that a granular material having a large specific gravity settles down.

On the other hand, if a polyether polymer in which a fluidity is high to such an extent that a film having a thin and even thickness can be extruded is used in an extrusion molding method, the film is highly likely to be short of a mechanical strength to be broken in molding. Accordingly, a cathode film obtained by the extrusion molding method is hard to be uniformized in a thickness and is scattered usually in electrical characteristics such as an impedance to a large extent.

### DISCLOSURE OF THE INVENTION

An object of the present invention is to provide a technique for producing a cathode film having a thin and even thickness and having stable electrical characteristics at a high productivity by an extrusion molding method.

The present inventors have paid attentions to a granular active material which is blended in a large amount to repeat intensive investigations in order to achieve the object described above, and as a result thereof, they have found that an active material showing a specific filling state is liable to be dispersed evenly in a polyether polymer and that use of the above active material makes it easy to obtain a cathode film having an evenly thin thickness by an extrusion molding method. The present invention has been completed based on these knowledges.

Thus, the following inventions 1 to 4 are provided according to the present invention.
1. An active material for a cathode film comprising a lithium compound having a void fraction of 0.36 or less.
2. A polyether polymer composition for a cathode film comprising a polyether polymer, an electrolytic salt compound which is soluble in the above polymer and the active material for a cathode film as described in the above item 1.
3. A cathode film prepared by extrusion-molding the polyether polymer composition as described in the above item 2.
4. A production process for a cathode film, characterized by extrusion-molding a polyether polymer composition for a cathode film comprising a polyether polymer, an electrolytic salt compound which is soluble in the above polymer and the active material for a cathode film as described in the above item 1.

According to the present invention, a cathode film having a thin and even thickness and having stable electrical characteristics can be produced at a high productivity by an extrusion molding method.

### THE MOST PREFERRED EMBODIMENT TO CARRY OUT THE INVENTION

The active material of the present invention for a cathode film which is blended with the polyether polymer in order to obtain a cathode film having a thin and even thickness and having stable electrical characteristics comprises a lithium compound having a void fraction of 0.36 or less.

The lithium compound which is the active material of the present invention for a cathode film is a lithium compound used usually for a cathode film made of a polymer.

The examples of the above lithium compound include lithium cobaltate (Li_{1.2}CoO₂, LiCoO₂ and the like), lithium manganese oxide (LiMn₂O₄, Li_{0.33}MnO and the like), lithium nickelate (LiNiO₂), lithium vanadate (LiV₂O₅), lithium iron phosphate (LiFePO₄), burned product of lithium iron phosphate and carbon, lithium phosphate vanadate (LiVOPO₄) and complex oxides thereof.

It is essential that the lithium compound has a void fraction of 0.36 or less, preferably 0.33 or less. If the void fraction is too large, it is likely that the cathode film is reduced in a mechanical strength to make it difficult to form a thin film and that scattering in a thickness of the film and the impedance is increased.

The void fraction prescribed in the present invention is a value showing a proportion of a space in which the lithium compound is not present when the lithium compound is most densely filled in a space of a fixed volume. The void fraction described above can be virtually determined by calculation using a program: ┌CALVOIDEN. EXE┘ (Himeji Institute of Technology, Fine Particle Engineering Lab., developed by M. Suzuki) described in a multicomponent particle void fraction estimation method (refer to Void fraction in Multicomponent Particle Random Filled Layer Having A Particle Size Distribution: M. Suzuki, H. Ichiba, I. Hasegawa, T. Ohshima: Chemical Engineering Collection 11, p. 438 to 443 (1985)).

The lithium compound described above has preferably a sufficiently small particle diameter in order to provide the cathode film having a thin and even thickness, and the average particle diameter thereof is usually 0.1 to 50 µm, preferably 0.3 to 30 µm and more preferably 0.5 to 25 µm. Accordingly, the lithium compound is preferably sufficiently decreased in a size by finely pulverizing.

A crusher for finely pulverizing the lithium compound includes a tube mill, a conical ball mill, a roller mill, an age runner and a jet mill. A classifying means includes methods using an alpine type air flow classifier and an elbow type classifier.

However, if the average particle diameter falls in the above range, the void fraction does not necessarily satisfy the range described above. Accordingly, a void fraction of the lithium compound is preferably controlled to the range described above by the following method. That is, the lithium compound is classified according to particle diameters, and the void fraction is controlled so that the numerical value of the void fraction falls in the range described above while carrying out (a) selecting a component falling in a specific particle diameter range among them, (b) removing a component having a particle diameter of a specific value or more and (c) adding a component falling in a specific particle diameter range to a non-classified component in a fixed proportion.

The polyether polymer composition of the present invention for a cathode film comprises a polyether polymer, an electrolytic salt compound which is soluble in the above polymer and the active material for a cathode film described above.

The polyether polymer described above shall not specifically be restricted as long as it comprises principally an oxyalkylene repetitive unit obtained by subjecting an oxirane monomer to ring opening polymerization. The oxirane monomer described above shall not specifically be restricted, but if an ethylene oxide monomer (a) is used as at least one component for the oxirane monomer used for the polymerization, a cathode film obtained by molding the polymer obtained from the above monomer is excellent in a mechanical strength, and therefore it is preferred. That is, in the polyether polymer used in the present invention, a mole ratio of the contents of an ethylene oxide monomer (a) unit and an oxirane monomer (b) unit which can be copolymerized with ethylene oxide is usually 70/30 to 99/1, preferably 80/20 to 99/1 and more preferably 85/15 to 99/1 in terms of (mole number of the monomer (a))/(mole number of the monomer (b)). If the content of the ethylene oxide monomer (a) unit is too small, it is likely that a crystallizing speed of the polyether polymer composition is reduced to make the cathode film in molding liable to be broken and that the cathode film is liable to stick on a cooling roll. On the other hand, if the content of the ethylene oxide monomer (a) unit is too large, it is likely that the smooth cathode film is less liable to be obtained.

The oxirane monomer (b) which can be copolymerized with ethylene oxide includes alkylene oxides having 3 to 20 carbon atoms, glycidyl ethers having 4 to 10 carbon atoms and oxides of aromatic vinyl compounds.

The oxirane monomer (b) which can be copolymerized with ethylene oxide may be used alone or in combination of two or more kinds thereof. In the present invention, the alkylene oxide having 3 to 20 carbon atoms and the glycidyl ether having 4 to 10 carbon atoms each described above are preferably used for at least one component thereof, and the alkylene oxide having 3 to 20 carbon atoms is more preferably used for at least one component thereof. The alkylene oxide having 3 to 20 carbon atoms is preferably propylene oxide.

A cross-linking oxirane monomer can be used for at least one component for the oxirane monomer (b) described above. The cross-linking oxirane monomer is a monomer obtained by introducing a cross-linking group into the oxirane monomer such as the alkylene oxide having 3 to 20 carbon atoms and the glycidyl ether having 4 to 10 carbon atoms each described above. When using the above cross-linking oxirane monomer, preferably used is the cross-linking oxirane monomer having a cross-linking group which can be cross-linked by light or peroxide such as a vinyl group, a hydroxyl group and an acid anhydride group. Among them, more preferably used is the cross-linking oxirane monomer having a vinyl group such as vinyl glycidyl ether and allyl glycidyl ether.

A polymerization catalyst used for subjecting the oxirane monomer (b) described above to ring opening polymerization shall not specifically be restricted, and capable of being used are polymerization catalysts which have so far conventionally been known as ring opening polymerization catalysts for oxirane compounds, such as a catalyst prepared by reacting organic aluminum with water and acetylacetone (Japanese Patent Publication No. 15797/1960), a catalyst prepared by reacting triisobuylaluminum with phosphoric acid and triethylamine (Japanese Patent Publication No. 27534/1971), a catalyst prepared by reacting triisobuylaluminum with an organic acid salt of diazabicycloundecene and phosphoric acid (Japanese Patent Publication No. 51171/1981), a catalyst comprising a partially hydrolyzed product of aluminum alkoxide and an organic zinc compound (Japanese Patent Publication No. 2945/1968), a catalyst comprising an organic zinc compound and polyhydric alcohol (Japanese Patent Publication No. 7751/1970) and a catalyst comprising dialkylzinc and water (Japanese Patent Publication No. 3394/1961).

A polymerization solvent shall not specifically be restricted as long as it does not deactivate the polymerization catalyst. Used are, for example, aromatic hydrocarbons such as benzene and toluene; saturated linear hydrocarbons such as n-pentane and n-hexane; and alicyclic hydrocarbons such as cyclopentane and cyclohexane.

Capable of being used as the polymerizing method is a solution polymerizing method in which an organic solvent dissolving the resulting polymer is used or a solvent slurry polymerizing method in which an organic solvent dissolving no resulting polymer is used, and preferred is the solvent slurry polymerizing method in which a solvent such as n pentane, n-hexane and cyclopentane is used.

Among the solvent slurry polymerizing methods, a two stage polymerizing method in which a seed is polymerized in advance and in which polymerization for growing the particles of the seed is then carried out is preferred since an amount of a scale sticking onto an inner wall of a reactor is small.

The polyether polymer used in the present invention is a polymer having a weight average molecular weight (Mw) of usually 100,000 to 1,500,000, preferably 150,000 to 1,000,000 and more preferably 200,000 to 600,000 in terms of polystyrene which is measured by a gel permeation method using dimethylforamide as a solvent and a molecular weight distribution (Mw/Mn, wherein Mn is a number average molecular weight) of usually 1.5 to 13, preferably 1.6 to 12 and more preferably 1.7 to 11.

If the Mw is too large, a torque and a die pressure of the extrusion molding machine go up, and therefore the mold processing is likely to become difficult. On the other hand, if the Mw is too small, the resulting cathode film is short of a mechanical strength and liable to be broken, and the film is liable to stick, so that it is likely to be difficult to stably produce the thin cathode film.

If the value of the Mw/Mn is either too large or too small, the melt viscosity in molding the film is elevated, and the die pressure goes up in extrusion molding to make processing difficult or a surface flatness of the cathode film extrusion-molded and an evenness in the thickness thereof are damaged.

The electrolytic salt compound used for the polyether polymer composition for the cathode film of the present invention shall not specifically be restricted as long as it is a compound which can transfer a cation and soluble in the polyether polymer described above. The specific examples of the above electrolytic salt compound include salts comprising anions such as halogen ions, perchloric acid ions, thiocyanic acid ions, trifluoromethanesulfonic acid ions (CF₃SO₃^{.}), bis(trifluoromethanesulfonyl)imide ions [N(CF₃SO₂)₂^{.}], bis(heptafluoropropylsulfonyl)imide ions [N(C₂F₅SO₂)₂-], trifluorosulfonimide ions, tetrafluoroboric acid ions (BF₄^{.}), nitric acid ions, AsF₆^{.}, PF₆^{.}, stearylsulfonic acid ions and octylsulfonic acid ions and cations of metals such as lithium, sodium, potassium, rubidium and cesium. Among the above electrolytic salt compounds, lithium salt compounds having a lithium ion as a cation are preferred. Further, among the lithium salt compounds, LiBF₄, LiPF₆, LiCF₃SO₃, LiN(CF₃SO₂)₂ and LiN(C₂F₅SO₂)₂ are more preferred. The above electrolytic salt compounds may be used alone or in combination of two or more kinds thereof.

A content of the electrolytic salt compound in the polyether polymer composition for the cathode film is usually 10 to 30 parts by weight, preferably 13 to 26 parts by weight and more preferably 17 to 22 parts by weight per 100 parts by weight of the polyether polymer. If the content of the electrolytic salt compound is too small, the cathode film is likely to be reduced in an ionic conductivity. On the other hand, if the content of the electrolytic salt compound is too large, the molding processability is reduced to make the cathode film likely to be unsatisfactory in a mechanical strength and an ionic conductivity.

The polyether polymer composition for the cathode film of the present invention may be blended, if necessary, with additives such as an electrical conductivity-providing agent, an antioxidant, a plasticizer, a cross-linking agent, a reinforcing agent, a lubricant, a flame retardant, an anti-mold agent, an anti-static agent, a colorant and a filler.

The electrical conductivity-providing agent includes acetylene black, Ketjen black and graphite.

The electrical conductivity-providing agent has an average particle diameter of usually 20 nm to 25 µm, preferably 50 nm to 10 µm. If the electrical conductivity-providing agent has a too small average particle diameter, it is likely that the agent is not evenly dispersed. On the other hand, if it has a too large average particle diameter, irregularities are produced on the surface of the cathode film, and the film is likely to be easily broken.

A blending amount of the electrical conductivity-providing agent is usually 20 parts by weight or less, preferably 15 parts by weight or less per 100 parts by weight of the active material described above. If the blending amount of the electrical conductivity-providing agent is too large, it is likely that the film having an even thickness is not obtained and that the charge and discharge capacity is reduced.

The antioxidant shall not specifically be restricted and is preferably a phenol base antioxidant, and it is particularly preferably a hindered phenol base antioxidant such as 4,4'-thiobis(6-tert-butyl-3-methylphenol) and 4,4'-butylidenebis(3-methyl-6-tert-butylmethylphenol).

A method for preparing the polyether polymer composition for the cathode film of the present invention includes a method in which it is prepared in advance before producing the cathode film and a method in which it is prepared in an extruding machine in producing the cathode film. In the former method, the composition is produced by mixing all or a certain part of the polyether polymer, the electrolytic salt compound, the active material of the present invention and the optional components described above which are blended if necessary by means of a mixer such as a mixing roll, a Banbury mixer, a kneader and a brabender. Or, the composition can be kneaded and pelletized by means of an extruding machine in place of the mixer. In the method in which the composition is prepared in an extruding machine, it is prepared by feeding the whole components into an introducing port of the extruding machine in molding the cathode film or feeding a part of the components into the introducing port and the remainder into a second introducing port disposed in the middle of a barrel between the introducing port and a die and kneading the mixture.

The kind of an extruding machine for molding the cathode film shall not be restricted. A two shaft extruding machine is preferred, and a two shaft extruding machine having a second introducing port is more preferred. The second introducing port can be used when feeding a component for reducing heat history and shearing.

A ratio L/D of a length of a barrel to an inner diameter thereof in the extruding machine is usually 10 to 50.

A film die such as a straight manifold die, a fish tail die and a coat hanger die is used as the die.

A temperature of the kneading part for stably producing the thin film from the polyether polymer composition is usually 80 to 200°C, preferably 100 to 190°C and more preferably 110 to 180°C. If the temperature of the kneading part is too low, the viscosity is likely to go up to make it difficult to smoothly extrude the thin film. On the other hand, if the temperature of the kneading part is too high, the polymer causes heat decomposition, and the film is likely to be reduced in a strength.

Further, the polyether polymer composition preferably contains a suitable amount of moisture in order to allow the composition to flow smoothly in melting and kneading. The moisture content is usually 200 to 10,000 ppm, preferably 400 to 6,000 ppm and more preferably 800 to 5,000 ppm based on the weight of the polyether polymer composition.

The cathode film extruded from the die of the extruding machine is rolled round a receiving roll via a cooling roll. A controlling roll is disposed before the receiving roll to detect a thickness and a tension of the film by means of the respective detecting means, and the results thereof are preferably fed back to the extruding machine and the controlling roll.

The surface of the film extruded from the die can be finished to a smoother state by making the surface of the cooling roll specular.

The cathode film obtained from the active material of the present invention for a cathode film has a thickness of usually 10 to 150 µm, preferably 20 to 100 µm. If the thickness is too small, the film is likely to be inferior in handling. On the other hand, if the thickness is too large, the film is likely to be reduced in an adhesive property and a folding property thereof with a laminate film brought into contact with the above film.

Use of the active material of the present invention makes it possible to continuously receive the cathode film having a thin and even thickness at a high speed without cutting since the active material is evenly dispersed in the polyether polymer. This makes it possible to produce the film at a very high productivity as compared with a conventional solution casting method. Further, the present process does not have a volatilizing step as is the case with the casting method, and therefore it is safe in terms of environmental protection.

### EXAMPLES

The present invention shall more specifically be explained below with reference to reference examples, examples and comparative examples, but the present invention shall by no means be restricted by them. ┌Parts┘ and ┌%┘ are based on weight unless otherwise described. The test and the evaluations were carried out by the following methods.
(1) Polymer composition :
   The composition of the polyether polymer was measured by means of 500 MHz ¹H-NMR and ¹³C-NMR.
(2) Weight average molecular weight (Mw) and molecular weight distribution (Mw/Mn) :
   Measured on the following conditions by means of gel permeation chromatography (GPC):
      Apparatus: GPC measuring apparatus manufactured by Toso Co., Ltd.
      Column: G7000HHR + GMHHR-H manufactured by Toso Co., Ltd.
      Solvent: dimethylformamide (lithium bromide 5 mmol/L)
      Flow velocity: 1 ml/min, column temperature: 40°C
      Molecular weight standard substance: standard
      polystyrene manufactured by Polymer Laboratory Co., Ltd.
(3) Particle diameter distribution of active material :
   The particle diameter distribution was measured by means of a laser diffraction type particle diameter measuring meter (SALD-2000, manufactured by Shimadzu Corporation).
(4) Void fraction :
   Calculated by the computer program ┌CALVOIDEN. EXE┘ described above using the average particle diameters, the porosities and the weight proportions of the respective classified components.
(5) Limit receiving speed of the film :
   A receiving speed of the film was set to 4 m/minute at the beginning as the indicator of a thin film moldability of the film to start extrusion of the film. The operation was stably carried out for 2 minutes, and then the receiving speed was raised by 1 m/minute. After that, it was continued to carry out the operation stably for 2 minutes at the respective speeds and then raise the receiving speed by 1 m/minute in the same manner, and the receiving speed immediately before the film was cut was determined to evaluate it as the limit receiving speed. The unit is m/minute.
(6) Average film thickness :
   The sample of the cathode film at the limit receiving speed in (5) described above was measured for thicknesses in 6 points at an interval of 20 cm by means of a digital film thickness meter, and an average value thereof was set as the average film thickness. The unit is µm.
(7) Scattering degree of film thickness :
   Shown by a value obtained by dividing a difference between a maximum value and a minimum value of the measured values in the 6 points per cathode film sample in (6) described above with the average value of the measured values in the 6 points. The smaller the numerical value, the smaller the scattering.
(8) Average impedance :
   A polypropylene-made gasket (outer diameter 20 mm, inner diameter 16 mm, height 3 mm) was disposed at a joining plane with a cap of a stainless steel-made vessel (diameter 20 mm, height 3 mm). The cathode film cut in the form of a circle having a diameter of 15 mm was set to the bottom of the above vessel, and a stainless steel-made disc (diameter 15 mm, thickness 1 mm) and then a spring (outer diameter 15 mm, inner diameter 10.6 mm, height 1.7 mm) were superposed thereon. Then, a stainless steel-made cap was covered thereon and fastened to prepare a coin type cell having a thickness of about 3.2 mm. The six test pieces per cathode film in (6) described above were used respectively to prepare six pieces of the coin type cells, and Zcos θ in an axis of ordinate was measured by means of an electrochemical measuring system (Impedance Analyzer 1260 type, manufactured by Solatron Co., Ltd.) to determine an average thereof.
(9) Scattering degree of impedance :
   Shown by a value obtained by dividing a difference between a maximum value and a minimum value of the measured values in the 6 points per cathode film sample in (8) described above with the average value of the measured values in the 6 points. The smaller the numerical value, the smaller the scattering.
(10) Cell capacity :
   The cathode film, then a solid electrolyte-containing cross-linked polymer film (refer to the following remark) comprising a polyether polymer B and lithium trifluoromethanesulfonylimide, a stainless steel-made disc and a spring were superposed in order in the same manner as in (8) described above on the bottom of a stainless steel-made vessel in which a polypropylene-made gasket was disposed, and a stainless steel-made cap was covered thereon and fastened to prepare a coin type cell having a thickness of about 3.2 mm. A capacity of the cell was determined by measuring an initial capacity of the cell at 60°C and a charge and discharge rate set to 0.2 by a constant current method after applying twice prescribed charge and discharge voltage (a voltage difference of 1.5 V between charge and discharge). Determined was an average value of the initial cell capacities measured for the six coin type cells prepared using respectively the six test pieces per cathode film. The unit is mAh/g-active material.
      (Remark): 100 parts of the polyether polymer B described in Reference Example 2, 32 parts of lithium trifluoromethanesulfonylimide and 2 parts of benzyl methyl ketal were dissolved in tetrahydrofuran, and the solution thus obtained was applied on a fluororesin plate and dried to obtain a film having a thickness of about 100µm. The film was irradiated with a UV ray to obtain a solid electrolyte-containing cross-linked polymer film.

### Reference Example 1 (production of polyether polymer A)

An autoclave equipped with a jacket and a stirrer was dried and substituted with nitrogen, and then it was charged with 65.1 parts of triisobutylaluminum, 217.9 parts of toluene and 121.6 parts of diethyl ether. The inside temperature was set to 30°C, and 11.26 parts of phosphoric acid was added thereto at a constant rate in 10 minutes while stirring. Triethylamine 5 parts was added thereto, and they were ripened and reacted at 60°C for 2 hours to obtain a catalyst solution.

The autoclave was substituted with nitrogen and charged with 1514 parts of n-hexane and 63.3 parts of the catalyst solution described above. The inside temperature was set to 30°C, and 7.4 parts of ethylene oxide was added thereto while stirring and reacted. Then, 14.7 parts of an equivalent weight mixed monomer of ethylene oxide and propylene oxide was added thereto and reacted to form a seed.

The inside temperature was set to 60°C, and a mixed solution comprising 439.6 parts (92 mole %) of ethylene oxide, 50.4 parts (8 mole %) of propylene oxide and 427.4 parts of n-hexane was continuously added thereto in 5 hours at an equivalent rate. After finishing addition, the reaction was continued for 2 hours. The polymerization reaction rate was 98 %. Added to the resulting slurry was 42.4 parts of a 5 % toluene solution of 4,4'-thiobis(6-tert-butyl-3-methylphenol) as an antioxidant. The polymer crumb was filtered and dried by vacuum at 40°C to obtain a powder-like polyether polymer A.

The polyether polymer A had a composition of 91.5 mole % of an ethylene oxide (EO) unit and 8.5 mole % of a propylene oxide (PO) unit. Further, this polymer had Mw of 272,000 and Mw/Mn of 4.5.

### Reference Example 2 (production of polyether polymer B)

Ethylene oxide, propylene oxide and allyl glycidyl ether were used to carry out seed polymerization in n-hexane by a publicly known method to obtain a powder-like polyether polymer B having 93.5 mole % of an EO unit, 2.8 mole % of a PO unit and 3.7 mole % of an allyl glycidyl ether (AGE) unit and having Mw of 350,000 and Mw/Mn of 10.2.

### Example 1

An introducing part of a 25 mm diameter two shaft extruding machine (screw revolution number: 300 rpm, L/D = 40) was fed with 30 parts of the polyether polymer A, 100 parts of an active material (prepared by putting three components of an active material a: 34 %, an active material c: 33 % and an active material d: 34 % in a polyethylene bag and mixing them for one minute), 5 parts of Koetchen black (Koetchen Black EC, average particle diameter: 39.5 nm, manufactured by Lion Co., Ltd.) which was an electrical conductivity-providing agent and 8 parts of lithium trifluoromethanesulfonylimide [LiN(CF₃SO₂)₂, manufactured by Kishida Chemical Co., Ltd.] which was an electrolytic salt compound to knead them to prepare a polyether polymer composition A, and it was extruded through a coat hanger film die at 14.3 kg/hour. The temperature conditions of the extruding machine were 30°C in the introducing part, 50 to 100°C in the melting part, 180°C in the kneading part, 140°C in the head and 140°C in the die. The film (width: 200 mm) extruded was brought into contact with a cooling roll (diameter: 200 mm) and then rolled round a receiving roll (diameter: 200 mm). The active materials a, c and d shall be described below together with active materials b, e and f.

Shown in Table 1 are results obtained by testing and evaluating a void fraction of the active material for the cathode film, a limit receiving speed, an average film thickness and a scattering degree in a film thickness of the resulting cathode film and an average impedance, a scattering degree in the impedance and an initial cell capacity of the coin type cell prepared using the above cathode film.

### Examples 2 to 4 and Comparative Example 1

The same procedure as in Example 1 was repeated, except that in Example 1, materials described in Table 1 were used as the active material. Results obtained by carrying out the tests and the evaluations in the same manners as in Example 1 are shown in Table 1.
Active material a: Cell Seed C-10, lithium cobaltate (LiCoO₂), average particle diameter: 10 µm, manufactured by Nippon Chemical Ind. Co., Ltd.
Active material b: Cell Seed C-5H, lithium cobaltate (LiCoO₂), average particle diameter: 5 µm, manufactured by Nippon Chemical Ind. Co., Ltd.
Active material c: the active material b was crushed by means of a jet mill (JOM-0101C4C, manufactured by Hosokawa Micron Co., Ltd.), and then particles having a small particle diameter were removed by classifying by means of an alpine type air flow classifier (100MZR, manufactured by Hosokawa Micron Co., Ltd.) to obtain a component having a particle diameter of 0.5 to 6 µm (average particle diameter: 3 µm).
Active material d: the active material b was crushed by means of the jet mill (JOM-0101C4C, manufactured by Hosokawa Micron Co., Ltd.), and then particles having a small particle diameter were removed by classifying by means of the alpine type air flow classifier to obtain a component having a particle diameter of 0.2 to 3 µm (average particle diameter: 1 µm).
Active material e: the active material b was classified by means of the alpine type air flow classifier to remove particles having a small particle diameter, and the active material was further classified by means of the alpine type air flow classifier to remove particles having a large particle diameter. The average particle diameter: 5 µm.
Active material f: lithium manganese oxide (Li_{0.33}MnO₂, average particle diameter: 0.5 µm, manufactured by Chuo Denki Kogyo Co., Ltd.) was classified by means of an elbow type classifier to remove particles having a large particle diameter. The average particle diameter: 0.8 µm.

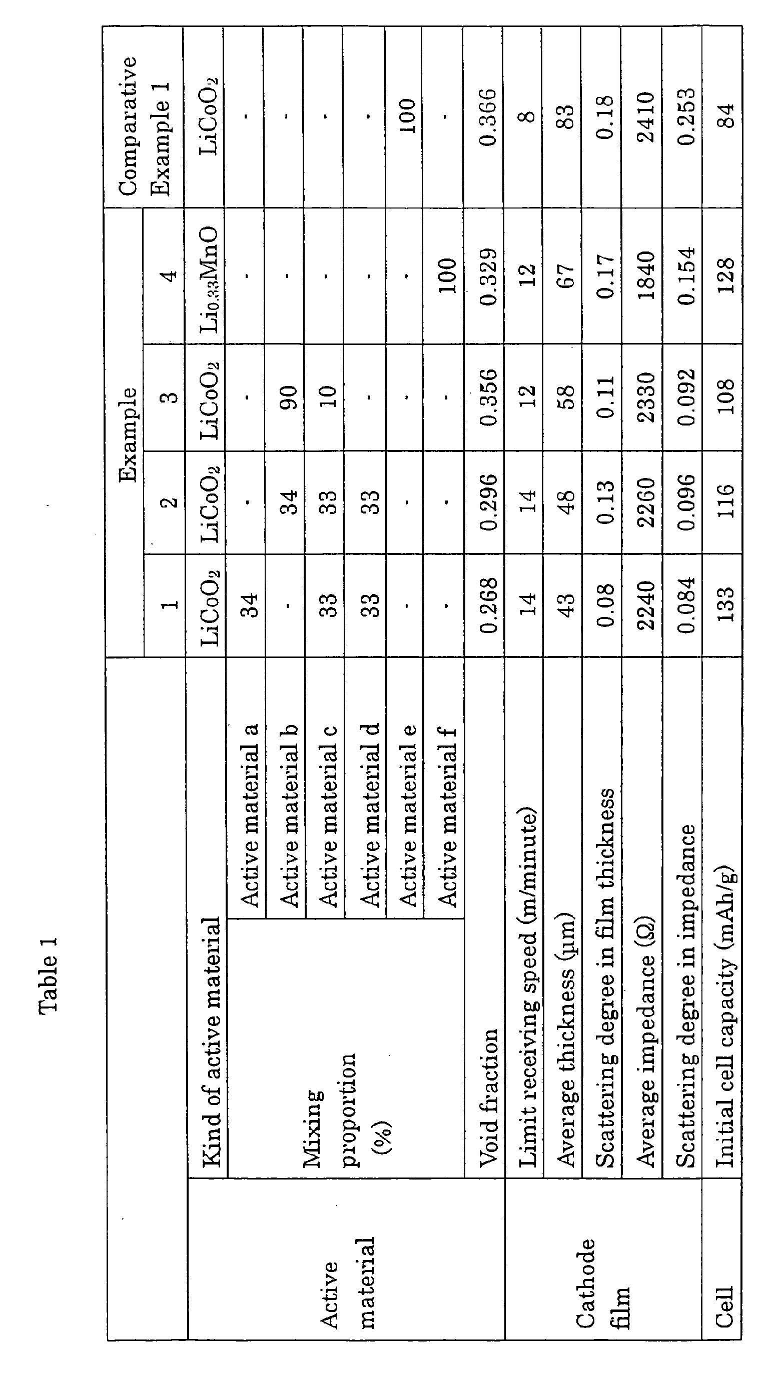

As apparent from the results shown in Table 1, use of the active material having a void fraction of 0.36 or less made it possible to produce the cathode film at a high receiving speed and a high productivity, and the film thus obtained had a thin and even thickness. A coin type cell prepared by using the above film for a cathode stably showed a low impedance and a high initial cell capacity (Examples 1 to 4).

On the other hand, use of the active material having a void fraction of larger than 0.36 decreased a limit receiving speed of the cathode film and reduced the productivity. Further, the resulting film had a large and uneven thickness, and a coin type cell prepared by using the above film for a cathode had a high impedance and a small initial cell capacity (Comparative Example 1).

## Claims

1. An active material for a cathode film comprising a lithium compound having a void fraction of 0.36 or less.

2. A polyether polymer composition for a cathode film comprising a polyether polymer, an electrolytic salt compound which is soluble in the above polymer and the active material for a cathode film as described in claim 1.

3. A cathode film prepared by extrusion-molding the polyether polymer composition as described in claim 2.

4. A production process for a cathode film, **characterized by** extrusion-molding a polyether polymer composition for a cathode film comprising a polyether polymer, an electrolytic salt compound which is soluble in the above polymer and the active material for a cathode film as described in claim 1.
